# EUROPEAN PATENT SPECIFICATION

(11) **EP 3 754 900 B1**
(45) Date of publication and mention of the grant of the patent: **15.01.2025**
(21) Application number: 19754780.5
(22) Date of filing: 16.02.2019
(51) Int. Cl.: H04L 9/32

(54) **METHOD FOR VALIDATING TRANSACTION IN BLOCKCHAIN NETWORK AND NODE FOR CONFIGURING SAME NETWORK**
VERFAHREN ZUR VALIDIERUNG EINER TRANSAKTION IN EINEM BLOCKCHAIN-NETZWERK UND KNOTEN ZUR KONFIGURATION DIESES NETZWERKS
PROCÉDÉ DE VALIDATION DE TRANSACTION DANS UN RÉSEAU DE CHAÎNE DE BLOCS ET NOEUD DE CONFIGURATION DE CE RÉSEAU

(30) Priority: 16.02.2018 JP 2018026529
(43) Date of publication of application: 23.12.2020
(73) Proprietor: bitFlyer Blockchain, Inc., Minato-ku Tokyo 1076237 (JP)
(72) Inventor: KANO Yuzo, Tokyo 107-6237 (JP); KOMIYAMA Takafumi, Tokyo 107-6237 (JP)
(74) Representative: Marks & Clerk LLP
(86) International application number: PCT/JP2019/005723
(87) International publication number: WO 2019/160128

(56) References cited:
- WO-A1-2017/042890
- WO-A1-2017/079652
- WO-A1-2017/079652
- CN-A- 107 247 773
- JP-A- 2016 151 802
- JP-A- 2017 200 196
- US-A1- 2017 228 731
- US-A1- 2017 344 987

## Description

### TECHNICAL FIELD

The present invention relates to a method for validating a transaction in a blockchain network and a node for configuring the network.

### BACKGROUND

In a blockchain network with a plurality of nodes, each node has a blockchain with a series of blocks on each of which a consensus on adoption has been formed. Each block has a header and a body containing one or more transactions.

Each transaction may take the hash value of the transaction as its identifier, which may be referred to as a "transaction id" (txid). txids are used to refer to past transactions, and a dictionary of them may be held at one or more nodes or at all nodes as necessary.

One of the situations in which txid is used is to prevent double execution of the same transaction. The block for which consensus on adoption is going to be reached is a block generated by one of the nodes by selecting one or more transactions from the transactions stored in a memory pool. When storing a transaction in the memory pool, a validation on whether the transaction is not included in past blocks on which consensuses were formed may be performed. Also, a validation with respect to transactions included in a block generated by other node may be performed.
WO2017079652 relates to a blockchain protocol for creating a public record of transactions to ensure only valid tokens can be used as transaction inputs, and used only one time. Transactions are assembled into a blockchain and digitally signed by a set of witnesses that verify the signature; a new key pair is generated to sign the next block in the chain, and the key used to sign the indelible block is erased to keep the historical record secure.
CN107247773 provides a method for implementing transaction query in a distributed database on the basis of a block chain. The method comprises the following steps: step S101, designing a Bloom filter, and finding out a candidate block which comprises an assigned transaction ID according to the designed Bloom filter; step S102, traversing and screening the candidate block, finding out a specific block, which comprises a transaction ID, of target transaction, and then constructing a Verify Message; step S103, verifying the completeness of a transaction path of the block by analysis of the Verify Message; and step S104, returning corresponding information according to a verify result, and implementing query of optional transaction in the distributed database on the basis of the block chain. By the method, query of the optional transaction in the distributed database on the basis of the block chain is realized, and the utilization rate of data of the block chain is increased.

### SUMMARY

### Technical Problem

However, in order to perform validations, a dictionary of txids for all transactions in past blocks on which consensuses were formed needs to be kept, and every time a new transaction is received, it needs to be checked that the transaction did not exist in the past by referring to the dictionary. This is a process which requires time or storage area as the block height increases.

The present invention has been made in view of the problem, and its objective is to increase the speed of validation or suppress the increase of storage area in a method for validating a transaction in a blockchain network and a node for configuring the network.

### Solution to the Problem

To achieve such an objective, a first embodiment of the present invention is a method for validating a transaction in a blockchain network, comprising the steps of: receiving a transaction to be validated, inputting the transaction to a Bloom filter generated based on one or more transactions included in past blocks on which consensuses were formed in the blockchain network, and determining that the transaction is valid when the output of the Bloom filter is false.

The second aspect of the invention is a method according to the first aspect, further comprising the steps of: searching a dictionary generated based on one or more transactions included in past blocks on which consensuses were formed in the blockchain network by using a txid of the transaction as a key when the output of the Bloom filter is true, and determining that the transaction is valid when the output of the Bloom filter is false.

A third aspect of the present invention is a method according to the second aspect, further comprising the step of determining that the transaction is invalid when the output of the Bloom filter is true.

A fourth aspect of the invention is the method according to any one of the first to third aspects, wherein data for configuring the Bloom filter is stored on a memory.

A fifth aspect of the invention is the method according to the fourth aspect, wherein the data is a data string generated from one or more txids corresponding to one or more transactions included in the past blocks on which consensuses were formed.

A sixth aspect of the invention is the method according to the fifth aspect, wherein the data string is longer in bit length than a txid of the transaction.

A seventh aspect of the invention is the method according to any one of the first to sixth aspects, wherein the transaction to be validated is one of one or more transactions included in a block on which a consensus is going to be formed.

An eighth form of the invention is the method according to the seventh aspect, further comprising the step of searching a temporary dictionary holding one or more txids corresponding to one or more transactions included in the block, using a txid of the transaction to be validated as a key.

Also, a ninth aspect of the invention is a program for causing a computer to perform a method for validating a transaction in a blockchain network, the method comprising the steps of: receiving a transaction to be validated, inputting the transaction to a Bloom filter generated based on one or more transactions included in past blocks on which consensuses were formed in the blockchain network, and determining that the transaction is valid when the output of the Bloom filter is false.

Also, a tenth aspect of the invention is 10. A node for configuring a blockchain network for validating a transaction, which receives a transaction to be validated, inputs the transaction to a Bloom filter generated based on one or more transactions included in past blocks on which consensuses were formed in the blockchain network, and determines that the transaction is valid when the output of the Bloom filter is false.

According to one aspect of the present invention, by inputting a transaction to be validated to a Bloom filter generated based on one or more transactions included in past blocks on which consensuses were formed in a blockchain network, and accessing a dictionary only when true is obtained as an output, access to the dictionary which is time-consuming can be suppressed and transaction validation can be accelerated.

### BRIEF DESCRIPTION OF THE DRAWINGS

FIG. 1 shows a blockchain network of the first embodiment of the present invention.
FIG. 2 is a flow diagram of a method of validating a transaction according to the first embodiment of the present invention.

### DETAILED DESCRIPTION

The embodiments of the present invention will be described in detail with reference to the drawings below.

### (First embodiment)

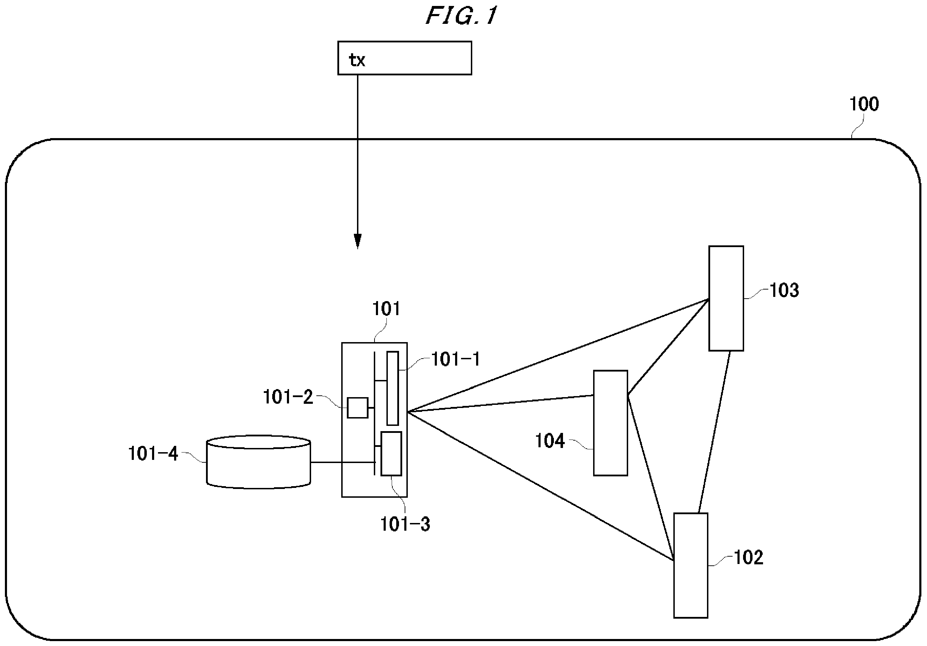

FIG. 1 illustrates a blockchain network according to the first embodiment of the present invention. The network 100 has a first node 101, a second node 102, a third node 103, and a fourth node 104. Each of these nodes has a blockchain and participates in consensus forming on the adoption of a new block. In FIG. 1, four examples are shown, but this is only an example. Nodes that do not participate in consensus forming may also be included in the network 100. In the following, we will focus on the first node 101. The other nodes can also have the configurations described below.

The first node 101 comprises a communication unit 101-1, such as a communication interface, a processing unit 101-2, such as a processor and CPU, a main storage device 101-3, such as a memory, and an auxiliary storage device 101-4, such as a hard disk and it can be configured by executing a program for performing each process. The first node 101 may include one or more devices or servers. The program may include one or more programs, and it can be recorded on a computer-readable storage medium to form a non-transitory program product.

Although main storage device 101-3 and auxiliary storage device 101-4 are described separately, they may be considered to be the same storage device or storage medium, or a storage device or storage medium that encompasses them may be considered a storage unit. The main storage device 101-3 and the auxiliary storage device 101-4 may include a plurality of storage devices or storage media, respectively. It is added that the data described below as being stored in the main storage device 101-3 may be stored in a cache memory such as L1, L2, L3, etc., which is possessed by the CPU or other processing unit 101-2. In this case, the main storage device 101-3 and the cache memory possessed by the processing unit 101-2 may be collectively referred to as the "first storage device" and the auxiliary storage device 101-4 may be collectively referred to as the "second storage device".

The first node 101 first receives a transaction (tx) generated within or outside the blockchain network 100 (S201). Here, the transaction may be generated in the network 100 and received by itself. In the example of FIG. 1, a transaction generated outside of the network 100 is received by the first node.

In addition to receiving one or more transactions directly, the transaction to be validated can be received by receiving a block generated by other node to receive one or more transactions included in the block.

The first node 101 provides the received transaction as an input to a Bloom filter (S202). The Bloom filter can be operated by storing a module having a program and data configuring the filter in the main storage device 101-3 or the first storage device and executing the program.

The data in question is generated based on one or more past transactions included in the blockchain held by each node configuring the network 100, and more specifically, the data can be generated based on one or more txids corresponding to the one or more past transactions.

The txid can be a 32-byte hash value, but as an example, we will discuss the 4-bit case. Assume that 0101, which corresponds to the first txid, and 1001, which corresponds to the second txid, exist as txids corresponding to past transactions. Each bit of these two txids can be superimposed to generate a 4-bit data string 1101, which can be used as the data for configuring the above Bloom filter. In other words, based on the one or more txids corresponding to the one or more past transactions, the data string generated by superimposing the bits with a value of 1 can be the data configuring the filter.

In practice, the length of the data string does not have to be the same as the length of the txid. The data string can be generated longer than the txid by performing some kind of transformation to one or more txids corresponding to one or more past transactions. For example, it is desired to be more than 100,000 times longer than the bit length of the txid, more preferably more than 500,000 times or 1,000,000 times longer than the bit length of the txid. If 32-byte txid is multiplied by 1,000,000 times, it would be 32 MB, which still can be stored in a general main storage device 101-3 or a first storage device.

The above Bloom filter always returns false as its output when the transaction input as the subject of validation is a transaction that is not part of the blocks on which consensuses were formed. When it returns true as its output, there is a case where the transaction existed in the past and a case where it didn't. Returning true despite not existing in the past is called false positive.

In practice, a more complex process is possible, but to illustrate the 4-bit example above, when a new 4-bit hash value of 1001 is given to the Bloom filter at the first node 101 as a target for validation, the program configuring the filter determines whether each of the bits with a value of 1 of the transaction to be validated also has a value of 1 in the data string. If positively determined for all of the bits with a value of 1 of the transaction to be validated, the Bloom filter returns true. Although 1001 does not exist in the past txids, it results in false positive when compared with to 1101.

When the above Bloom filter returns true, the first node 101 searches a dictionary using the txid of the transaction to be validated as the key or searches the dictionary based on the txid to determine its existence or absence (S203). The dictionary holds txids of one or more transactions or all transactions included in past blocks on which consensuses were formed, in ordered manner, which can be stored in the auxiliary storage device 101-4 or the second storage device.

If the search result of the dictionary is false, that is, if the txid of the transaction to be validated is not included in the dictionary, the transaction to be validated is determined to be valid (S204).

If the above Bloom filter returns false, the transaction to be validated is determined to be valid as well (S204).

If the search result of the dictionary is true, that is, if the txid of the transaction to be validated is included in the dictionary, the transaction to be validated is determined to be invalid (S205).

As described above, in addition to a dictionary, by generating and storing a Bloom filter based on one or more transactions included in past blocks on which consensuses were formed or their txids, time-consuming access to the dictionary is suppressed to accelerate transaction validation. In particular, by storing the Bloom filter module in the main storage device 101-3 or the first storage device, such as a memory, further accelerates the speed.

It is desired to update the Bloom filter and the dictionary for one or more transactions in a new block after consensus has been formed with respect to the new block but before receiving the next transaction to be validated.

As an alternative embodiment of the above described Bloom filter, each value of the data string configuring the filter may be in the unit of bytes, not bits. In this embodiment, the value of the byte at a position corresponding to the bit of the txid with a value of 1 can be incremented according to the number of txids with a value of 1 at the position. If 0101, which corresponds to the first txid, and 1001, which corresponds to the second txid, are assumed to exist as txids corresponding to past transactions, generated data string will be 1102 of 4 bytes. If we further consider 0001 as the third txid, the data string would be 1103. By doing so, it is possible to delete the txid reflected in the past. In this embodiment, as an example, true or false can be determined by determining whether bytes corresponding to bits whose values are 1 of the transaction to be validated have values equal to or larger than 1. A filter described herein as a Bloom filter may be a filter that performs the required operation described.

It is to be noted that if the term "only" is not written, such as in "based only on x", "in response to x only", or "in the case of x only", in the present specification, it is assumed that additional information may also be taken into account.

In addition, as a caveat, even if there are aspects of a method, program, terminal, apparatus, server or system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

### (Second embodiment)

In the first embodiment, where validation of whether the transaction to be validated is a transaction included in past blocks on which consensuses were formed is described, it is not possible to prevent multiple identical transactions from being included in a block on which consensus is going to be formed.

So, in a second embodiment of the invention, the first node 101 generates a temporary dictionary for a block generated by itself or received from other node that temporarily holds one or more txids corresponding to the one or more transactions included in the block.

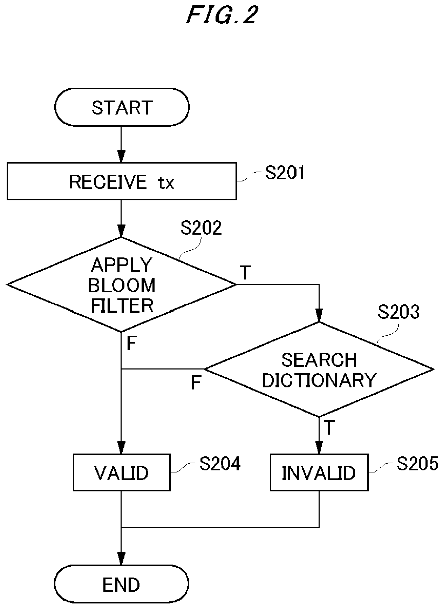

For example, in the validation method described in the first embodiment, even if the Bloom filter returns a false (S202), the same txid may be found by searching the temporary dictionary. In this case, the transaction to be validated must be determined to be invalid. The same is true when the dictionary returns false (S203). Alternatively, a temporary dictionary search can be performed on all transactions before uniformly applying the Bloom filter, using the txid of the transaction to be validated as a key. The temporary dictionary search timing can be random or variable according to a predetermined rule, or it can be executed in parallel with the loop shown in FIG. 2.

### REFERENCE SIGNS LIST

- 100: blockchain network
- 101: first node
- 101-1: communication unit
- 101-2: processing unit
- 101-3: main storage device
- 101-4: auxiliary storage device
- 102: second node
- 103: third node
- 104: fourth node

## Claims

1. A method for validating a transaction in a blockchain network (100), comprising steps of:
receiving (S201) a transaction to be validated,
inputting (S202) the transaction or a txid corresponding to the transaction to a Bloom filter generated based on one or more transactions included in past blocks on which consensuses were formed in the blockchain network,
determining (S204) that the transaction is valid when the output of the Bloom filter is false,
searching a dictionary (S203) which holds txids of one or more transactions included in past blocks on which consensuses were formed in the blockchain network, by using the txid of the transaction as a key when the output of the Bloom filter is true,
**characterized in that** it further comprises the steps of:
determining (S204) that the transaction is valid when the output of the dictionary is false, and
determining (S205) that the transaction is invalid when the output of the dictionary is true.

2. The method according to claim 1, wherein data for configuring the Bloom filter is stored on a memory.

3. The method according to claim 2, wherein the data is a data string generated from one or more txids corresponding to one or more transactions included in the past blocks on which consensuses were formed.

4. The method according to claim 3, wherein the data string is longer in bit length than a txid of the transaction.

5. The method according to any one of claims 1 to 4, wherein the transaction to be validated is one of one or more transactions included in a block on which a consensus is going to be formed.

6. The method according to claim 5, further comprising the step of searching a temporary dictionary holding one or more txids corresponding to one or more transactions included in the block on which a consensus is going to be formed, using a txid of the transaction to be validated as a key.

7. A program for causing a computer to perform a method for validating a transaction in a blockchain network (100), the method comprising steps of:
receiving (S201) a transaction to be validated,
inputting (S202) the transaction or a txid corresponding to the transaction to a Bloom filter generated based on one or more transactions included in past blocks on which consensuses were formed in the blockchain network,
determining (S204) that the transaction is valid when the output of the Bloom filter is false,
searching a dictionary (S203) which holds txids of one or more transactions included in past blocks on which consensuses were formed in the blockchain network, by using the txid of the transaction as a key when the output of the Bloom filter is true,
the method being **characterized in that** it further comprises the steps of: 9I
determining (S204) that the transaction is valid when the output of the dictionary is false, and
determining (S205) that the transaction is invalid when the output of the dictionary is true.

8. A node (101) for configuring a blockchain network (100) for validating a transaction, which is configured to:
receive (S201) a transaction to be validated,
input (S202) the transaction or a txid corresponding to the transaction to a Bloom filter generated based on one or more transactions included in past blocks on which consensuses were formed in the blockchain network,
determine (S204) that the transaction is valid when the output of the Bloom filter is false,
search a dictionary (S203) which holds txids of one or more transactions included in past blocks on which consensuses were formed in the blockchain network, by using the txid of the transaction as a key when the output of the Bloom filter is true,
**characterized in** being further configured to:
determine (S204) that the transaction is valid when the output of the dictionary is false, and
determine (S205) that the transaction is invalid when the output of the dictionary is true.

## Patentansprüche

1. Verfahren zum Validieren einer Transaktion in einem Blockchain-Netzwerk (100), das die folgenden Schritte umfasst:
Empfangen (S201) einer zu validierenden Transaktion,
Eingeben (S202) der Transaktion oder einer der Transaktion entsprechenden Transaktions-ID in einen Bloom-Filter, der basierend auf einer oder mehreren Transaktionen, die in vergangenen Blöcken eingeschlossen sind, über die in dem Blockchain-Netzwerk Konsense gebildet wurden, erzeugt wird,
Bestimmen (S204), dass die Transaktion gültig ist, wenn die Ausgabe des Bloom-Filters falsch ist,
Durchsuchen eines Wörterbuchs (S203), das Transaktions-IDs einer oder mehrerer Transaktionen, die in vergangenen Blöcken eingeschlossen sind, über die in dem Blockchain-Netzwerk Konsense gebildet wurden, enthält, unter Verwendung der Transaktions-ID der Transaktion als ein Schlüssel, wenn die Ausgabe des Bloom-Filters wahr ist,
**dadurch gekennzeichnet, dass** es ferner die folgenden Schritte umfasst:
Bestimmen (S204), dass die Transaktion gültig ist, wenn die Ausgabe des Wörterbuchs falsch ist, und
Bestimmen (S205), dass die Transaktion ungültig ist, wenn die Ausgabe des Wörterbuchs wahr ist.

2. Verfahren nach Anspruch 1, wobei Daten zum Konfigurieren des Bloom-Filters in einem Speicher gespeichert sind.

3. Verfahren nach Anspruch 2, wobei die Daten eine Datenkette sind, die aus einer oder mehreren Transaktions-IDs erzeugt wird, die einer oder mehreren Transaktionen, die in den vergangenen Blöcken eingeschlossen sind, über die Konsense gebildet wurden, entsprechen.

4. Verfahren nach Anspruch 3, wobei die Datenkette eine längere Bitlänge aufweist als eine Transaktions-ID der Transaktion.

5. Verfahren nach einem der Ansprüche 1 bis 4, wobei die zu validierende Transaktion eine von einer oder mehreren Transaktionen ist, die in einem Block eingeschlossen sind, über den ein Konsens gebildet werden wird.

6. Verfahren nach Anspruch 5, ferner umfassend den Schritt des Durchsuchens eines temporären Wörterbuchs, das eine oder mehrere Transaktions-IDs enthält, die einer oder mehreren Transaktionen entsprechen, die in dem Block eingeschlossen sind, über den ein Konsens gebildet wird, unter Verwendung einer Transaktions-ID der zu validierenden Transaktion als ein Schlüssel.

7. Programm, das einen Computer veranlasst, ein Verfahren zum Validieren einer Transaktion in einem Blockchain-Netzwerk (100) durchzuführen, wobei das Verfahren die folgenden Schritte umfasst:
Empfangen (S201) einer zu validierenden Transaktion,
Eingeben (S202) der Transaktion oder einer der Transaktion entsprechenden Transaktions-ID in einen Bloom-Filter, der basierend auf einer oder mehreren Transaktionen, die in vergangenen Blöcken eingeschlossen sind, über die in dem Blockchain-Netzwerk Konsense gebildet wurden, erzeugt wird,
Bestimmen (S204), dass die Transaktion gültig ist, wenn die Ausgabe des Bloom-Filters falsch ist,
Durchsuchen eines Wörterbuchs (S203), das Transaktions-IDs einer oder mehrerer Transaktionen, die in vergangenen Blöcken eingeschlossen sind, über die in dem Blockchain-Netzwerk Konsense gebildet wurden, enthält, unter Verwendung der Transaktions-ID der Transaktion als ein Schlüssel, wenn die Ausgabe des Bloom-Filters wahr ist,
wobei das Verfahren **dadurch gekennzeichnet ist, dass** es ferner die folgenden Schritte umfasst:
Bestimmen (S204), dass die Transaktion gültig ist, wenn die Ausgabe des Wörterbuchs falsch ist, und
Bestimmen (S205), dass die Transaktion ungültig ist, wenn die Ausgabe des Wörterbuchs wahr ist.

8. Knoten (101) zum Konfigurieren eines Blockchain-Netzwerks (100) zum Validieren einer Transaktion, der zu Folgendem konfiguriert ist:
Empfangen (S201) einer zu validierenden Transaktion,
Eingeben (S202) der Transaktion oder einer der Transaktion entsprechenden Transaktions-ID in einen Bloom-Filter, der basierend auf einer oder mehreren Transaktionen, die in vergangenen Blöcken eingeschlossen sind, über die in dem Blockchain-Netzwerk Konsense gebildet wurden, erzeugt wird,
Bestimmen (S204), dass die Transaktion gültig ist, wenn die Ausgabe des Bloom-Filters falsch ist,
Durchsuchen eines Wörterbuchs (S203), das Transaktions-IDs einer oder mehrerer Transaktionen, die in vergangenen Blöcken eingeschlossen sind, über die in dem Blockchain-Netzwerk Konsense gebildet wurden, enthält, unter Verwendung der Transaktions-ID der Transaktion als ein Schlüssel, wenn die Ausgabe des Bloom-Filters wahr ist,
**dadurch gekennzeichnet, dass** er ferner zu Folgendem konfiguriert ist:
Bestimmen (S204), dass die Transaktion gültig ist, wenn die Ausgabe des Wörterbuchs falsch ist, und
Bestimmen (S205), dass die Transaktion ungültig ist, wenn die Ausgabe des Wörterbuchs wahr ist.

## Revendications

1. Procédé de validation d'une transaction dans un réseau de chaîne de blocs (100), comprenant les étapes consistant à :
recevoir (S201) une transaction à valider,
entrer (S202) la transaction ou un identifiant de transaction correspondant à la transaction dans un filtre de Bloom généré sur la base d'une ou de plusieurs transactions incluses dans des blocs antérieurs sur lesquels des consensus ont été formés dans le réseau de chaîne de blocs,
déterminer (S204) que la transaction est valide lorsque la sortie du filtre de Bloom est fausse,
rechercher dans un dictionnaire (S203) qui conserve des identifiants de transaction(s) d'une ou de plusieurs transactions incluses dans des blocs antérieurs sur lesquels des consensus ont été formés dans le réseau de chaîne de blocs, en utilisant l'identifiant de transaction de la transaction en tant que clé lorsque la sortie du filtre de Bloom est vraie,
**caractérisé en ce qu'**il comprend en outre les étapes consistant à :
déterminer (S204) que la transaction est valide lorsque la sortie du dictionnaire est fausse, et
déterminer (S205) que la transaction est invalide lorsque la sortie du dictionnaire est vraie.

2. Procédé selon la revendication 1, dans lequel des données permettant de configurer le filtre de Bloom sont stockées dans une mémoire.

3. Procédé selon la revendication 2, dans lequel les données sont une chaîne de données générée à partir d'un ou de plusieurs identifiants de transaction(s) correspondant à une ou plusieurs transactions incluses dans les blocs antérieurs sur lesquels des consensus ont été formés.

4. Procédé selon la revendication 3, dans lequel la chaîne de données est plus longue en termes de longueur de bits qu'un identifiant de transaction de la transaction.

5. Procédé selon l'une quelconque des revendications 1 à 4, dans lequel la transaction à valider est une d'une ou de plusieurs transactions incluses dans un bloc sur lequel un consensus sera formé.

6. Procédé selon la revendication 5, comprenant en outre l'étape consistant à rechercher dans un dictionnaire temporaire conservant un ou plusieurs identifiants de transaction(s) correspondant à une ou à plusieurs transactions incluses dans le bloc sur lequel un consensus sera formé, à l'aide d'un identifiant de transaction de la transaction à valider en tant que clé.

7. Programme permettant d'amener un ordinateur à réaliser un procédé permettant de valider une transaction dans un réseau de chaîne de blocs (100), le procédé comprenant les étapes consistant à :
recevoir (S201) une transaction à valider,
entrer (S202) la transaction ou un identifiant de transaction correspondant à la transaction dans un filtre de Bloom généré sur la base d'une ou de plusieurs transactions incluses dans des blocs antérieurs sur lesquels des consensus ont été formés dans le réseau de chaîne de blocs,
déterminer (S204) que la transaction est valide lorsque la sortie du filtre de Bloom est fausse,
rechercher dans un dictionnaire (S203) qui conserve des identifiants de transaction(s) d'une ou de plusieurs transactions incluses dans des blocs antérieurs sur lesquels des consensus ont été formés dans le réseau de chaîne de blocs, à l'aide de l'identifiant de transaction de la transaction en tant que clé lorsque la sortie du filtre de Bloom est vraie,
le procédé étant **caractérisé en ce qu'**il comprend en outre les étapes consistant à :
déterminer (S204) que la transaction est valide lorsque la sortie du dictionnaire est fausse, et
déterminer (S205) que la transaction est invalide lorsque la sortie du dictionnaire est vraie.

8. Noeud (101) permettant de configurer un réseau de chaîne de blocs (100) permettant de valider une transaction, qui est configuré pour :
recevoir (S201) une transaction à valider,
entrer (S202) la transaction ou un identifiant de transaction correspondant à la transaction dans un filtre de Bloom généré sur la base d'une ou de plusieurs transactions incluses dans des blocs antérieurs sur lesquels des consensus ont été formés dans le réseau de chaîne de blocs,
déterminer (S204) que la transaction est valide lorsque la sortie du filtre de Bloom est fausse,
rechercher dans un dictionnaire (S203) qui conserve des identifiants de transaction(s) d'une ou de plusieurs transactions incluses dans des blocs antérieurs sur lesquels des consensus ont été formés dans le réseau de chaîne de blocs, à l'aide de l'identifiant de transaction de la transaction en tant que clé lorsque la sortie du filtre de Bloom est vraie,
**caractérisé en ce qu'**il est en outre configuré pour :
déterminer (S204) que la transaction est valide lorsque la sortie du dictionnaire est fausse, et
déterminer (S205) que la transaction est invalide lorsque la sortie du dictionnaire est vraie.
